# EUROPEAN PATENT SPECIFICATION

(11) **EP 1 507 624 B1**
(45) Date of publication and mention of the grant of the patent: **28.06.2006**
(21) Application number: 03714919.2
(22) Date of filing: 04.04.2003
(51) Int. Cl.: B23K 11/087, B23K 11/18, B23K 35/00

(54) **METHOD OF WELDING ALUMINIUM ALLOY STRIP PRODUCTS**
VERFAHREN ZUM SCHWEISSEN VON BANDMATERIAL AUS ALUMINIUMLEGIERUNGEN
PROCEDE DE SOUDAGE DE PRODUITS EN BANDES A BASE D'ALLIAGE D'ALUMINIUM

(30) Priority: 08.05.2002 EP 02076773
(43) Date of publication of application: 23.02.2005
(73) Proprietor: Corus Technology BV, 1970 CA IJmuiden (NL)
(72) Inventor: LAHAYE, Christiaan, Theodorus, Wilhelmus, NL-1705 KW Heerhugowaard (NL); WITTEBROOD, Adrianus, Jacobus, NL-1991 HB Velserbroek (NL)
(74) Representative: van der Donk, Henricus Matheus
(86) International application number: PCT/EP2003/003597
(87) International publication number: WO 2003/095136

(56) References cited:
- EP-A- 0 654 320
- DE-C- 404 923
- US-A- 4 546 229
- US-A- 5 302 797
- PATENT ABSTRACTS OF JAPAN vol. 017, no. 607 (M-1507), 9 November 1993 (1993-11-09) -& JP 05 185245 A (HONDA MOTOR CO LTD), 27 July 1993 (1993-07-27)
- PATENT ABSTRACTS OF JAPAN vol. 013, no. 077 (M-801), 22 February 1989 (1989-02-22) -& JP 63 278679 A (KOBE STEEL LTD), 16 November 1988 (1988-11-16)

## Description

The invention relates to a method of lap joining two or more aluminium alloy strip products, wherein the aluminium alloy strip products are held together in a stack with a melting layer in between them, at least locally where the lap joint is to be formed, and an electric current is passed from one to another aluminium alloy strip product via the melting layer whereby heat is dissipated in the stack thereby at least locally melting the melting layer.

Such a method of lap joining strip products is known in the art, e.g. from EP-0 654 320-A1, as a form of resistance welding.

Aluminium is a very good electric conductor, and the high melting oxide film that is generally present on the surface of the aluminium alloy strip products impedes the joining process and leads to increased electrode wear. When the oxide film eventually breaks, the resistance suddenly drops causing uncontrolled melting of a large fraction of the remaining aluminium material. Thus, resistance welding of aluminium alloy strip products is known to be problematic in general.

Nevertheless, a method of lap joining two aluminium alloy strip products is known. In an article published in Der Praktiker 5/2001 on page 196, entitled "Punktförmiges Widerstandslöten", by G. Sitte, a method is proposed wherein sheets of an Aluminium Association A.A3xxx alloy are lap joined. One of the sheets is provided with a melting layer, being a brazing cladding layer that is bonded to the sheet by a rolling process. The brazing cladding layer consists of an AlSi alloy, and has a thickness of 60 to 100 /µm. When lap joining these sheets, they are held together in a stack by and between two opposing electrodes of a spot welding machine, with the brazing cladding layer in the middle as the melting layer. The sheets are then lap joined by passing a current though the sheets via the electrodes.

This works as follows. The melting range of the AlSi alloy in the brazing clad layer is lower than that of the aluminium alloy in the sheets. Thus, the brazing clad layer melts before the sheets melt in response to the power dissipation in the stack caused by the electric current. The lap joint is thus formed by the brazing cladding layer forming a weld.

It is a drawback of the known method, that the melting layer needs to consist of a different alloy than the sheets to obtain a lower melting range than that of the sheets.

Use of a different alloy may cause chemical change in the sheet alloy in and in the vicinity of the lap joint, which in turn may result in adverse effects in the lap joint such as a reduction in corrosion resistance.

European application EP-0654320-A1 which is considered the closest prior art discloses an aluminium weldment produced by resistance-welding aluminium workpieces, and having a nugget formed between the aluminium workpieces which contains more magnesium than the base material of the aluminium workpieces. The nugget contains 5 to 17 wt.% of magnesium which forms a solid solution with aluminium. The nugget or separate thin sheet has a lower melting point and/or a higher resistance than the aluminium alloy sheets to be welded.

It is another drawback of the known method, that relatively high electric current is required as compared to lap joining of steel strip products. It will be appreciated by the person skilled in the art that this results in a relatively low life time of the electrodes.

It is an object of the invention to provide a versatile method of lap joining two aluminium strip products.

It is another object of the invention to provide a method of lap joining two aluminium strip products that does not require a melting layer having a lower melting range.

It is yet another object of the invention to reduce the current that is needed for lap joining the aluminium alloy strip products.

It is still another object of the invention to improve the life time of welding electrodes.

One or more of these objects is achieved according to the invention with a method of lap joining two or more aluminium alloy strip products according to claim 1.

In the scope of the present invention, a relatively high electric resistance is to be understood as compared to the resistance of either one of the aluminium alloy strip products that is to be lap joined.

The electric current that is passed through the stack from one aluminium alloy strip product to the other dissipates most of its power in regions of relatively high electric resistance. Because, according to the invention, two of such regions are in the vicinity of the melting layer, a high fraction of the power dissipation occurs in the vicinity of the melting layer. Thus, the melting layer is heated more rapidly than the aluminium alloy strip products, and consequently, the actual temperature within the melting layer can be higher than the temperature of the surrounding aluminium alloy strip products.

Since the melting material is heated on both sides simultaneously, it heats up much quicker than the aluminium alloy strip products that are held together during the lap joining. Therefore, the power needed for establishing a weld is reduced.

As a consequence, the life time of the electrodes is improved with the method of the invention.

Moreover, even a melting layer having a melting range overlapping with that of the surrounding aluminium alloy strip products can melt to form the lap joint, before the surrounding aluminium alloy strip products melt. Therefore, it is not necessary to choose a melting layer having a lower melting range than the surrounding aluminium alloy strip products.

It is further remarked, that an additional advantage of the invention is that the specific resistance of the melting layer itself may be relatively low thanks to the provision of the regions of a relatively high electric resistance between the melting layer and each one of the aluminium alloy strip products.

In a preferred embodiment of the invention, a region of a relatively low thermal conductivity is provided between the melting layer and each one of the aluminium alloy strip products. Herewith, a thermal barrier between the melting layer and the aluminium alloy strip products is created, by virtue of which the heat that is brought in the melting layer is impeded from flowing into the aluminium alloy strip products. In the scope of the present description, a relatively low thermal conductivity is to be understood as compared to the thermal conductivity of either one of the aluminium alloy strip products that is to be lap joined.

The region of a relatively low thermal conductivity may be coincident with the region of relatively high electric resistance, i.e. both regions are embodied in one region of both relatively low thermal conductivity and relatively high electric resistance.

It is preferred that the thermal mass per unit area of the melting layer, i.e. a product of mass per unit area and specific heat of the melting layer, is lower than that of each of the aluminium alloy strip products. Because of the lower thermal mass, the temperature of the melting layer will more quickly exceed that of the aluminium alloy strip products even when the amount of heat deposited in the aluminium alloy strip products would be equal to that deposited in the melting layer.

It has been found that, with the method according to the invention, aluminium alloy strip products can be lap joined using a melting layer of a similar or even identical alloy as the aluminium alloy strip products that are to be joined, thus causing no significant chemical change in the weld region.

An advantageous way of achieving a region of a relatively high electric resistance between the melting layer and each one of the aluminium alloy strip products, is to use a separate foil as the melting layer.

Because the separate foil has a surface separate from the surface of the aluminium alloy strip products, there is a certain electrical resistance at the contact interface between the foil and the strip products, causing a high fraction of the power dissipation to occur in the vicinity of the foil.

Moreover, since the separate foil has a surface that is separate from the surface of the aluminium alloy strip products, there is also provided a region of relatively low thermal conductivity between melting layer and the aluminium alloy strip products.

Moreover, the both sides of the separate foil may be purposely or inherently provided with a surface region of a relatively high electric resistance and/or relative low thermal conductivity.

Many metallic foils can comprise an oxidised surface, for instance in the form of a native oxide. Such a native oxide is present on an aluminium alloy foil. Such a surface oxide provides a region of relatively high electric resistance that helps to localise the dissipation of power in the vicinity of the melting layer.

A lower thermal mass per unit area can conveniently be obtained by choosing a thin gauge foil relative to the thickness gauge of the aluminium alloy strip products. The advantage of using a relatively thin gauge foil is that the surface damage under the electrodes is limited because the distance over which the aluminium alloy strip products can be displaced to each other is relatively small.

It is preferred that the foil has a thickness gauge thinner than half of that of the thinnest of the two aluminium alloy strip products that are to be lap joined. This is a convenient way to obtain a lower thermal mass per unit area.

It is more preferred that the foil has a thickness gauge thinner than 20 % of that of the thinnest of the two aluminium alloy strip products that are to be lap joined. It has been found that with a thickness ratio of less than 20 %, the difference in thermal mass per unit area is sufficient for obtaining a good lap joint when the melting range of the foil is approximately equal to that of the surrounding aluminium alloy strip products.

In an embodiment, the separate foil has been provided with a clad layer or plating layer. Such a clad layer or plating layer is in accordance with the invention no longer necessary for the lap joining, but it can still be advantageous for certain applications to have such a layer provided.

Likewise, the fact that it is one of the advantages of the invention that a cladding or plating layer provided on the aluminium strip products is no longer necessary for the lap joining, does not prejudice the option of applying the invention of lap joining to aluminium strip products of which at least one is provided with a clad layer of plating layer. In this respect, it is an advantage of the invention that the choice of an optional clad layer or plating layer is no longer restricted by its suitability for lap joining function, because the optional clad layer or plating layer is no longer required for that function. Thus the option of having the clad layer or plating layer is available for obtaining certain product properties that make the product more valuable for certain applications.

It is preferred that the surfaces of the aluminium alloy strip products are de-oxidised, for instance by pickling. Herewith, the dissipation of power is guided even better into the melting layer, since the electric resistance at the surfaces of the aluminium alloy strip products is lowered.

The invention also relates to products comprising aluminium sheet products that have been lap joined according to any embodiment of the invention described above, and in particular it relates to automotive panel and a fuel tank.

The invention will now be illustrated with reference to some examples and figures, wherein
Fig. 1 schematically illustrates the method of the invention;
Fig. 2shows a cross sectional micrograph of two lap joined AA2024 alloy strip products using a AA2024 alloy foil as melting layer;
Fig. 3 shows a cross sectional micrograph of two lap joined AA7050 alloy strip products using a AA7050 alloy foil as melting layer;
Fig. 4, parts a and b, show cross sectional micrographs of two lap joined AA6016 alloy strip products using a AA1050 alloy foil as melting layer; and
Fig. 5, parts a and b, show cross sectional micrographs of two lap joined AA6016 alloy strip products using a AA4045 alloy foil as melting layer.

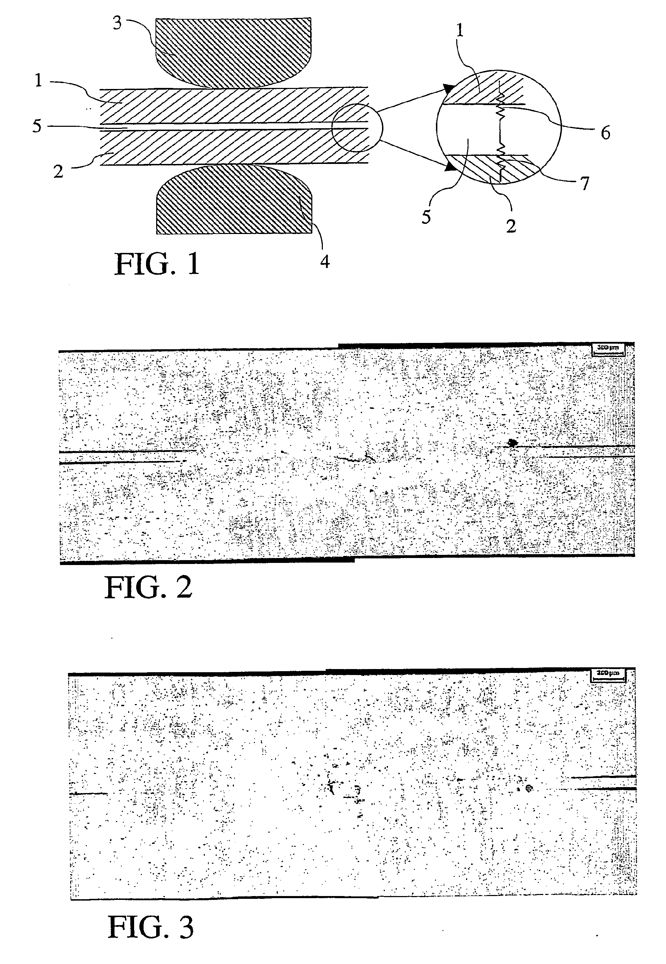

Fig. 1 shows schematically in cross section two aluminium alloy strip products 1,2 being held together in a stack by two electrodes 3,4 of a spot welding device. A metal foil 5 is held between the two aluminium alloy strip products 1,2. When an electric current is passed from electrode 3 to electrode 4, or vice versa, heat is generated at the interfaces where the aluminium alloy strip products 1,2 are in contact with the metal foil 5.

The electric power dissipation is a product of the current square and the resistance. Especially when there is a surface oxide present, that exhibits a high electric resistance, the interfaces of the foil to the aluminium alloy strip products will act as resistors, such as is schematically illustrated by the resistors 6,7 in the inset in FIG. 1 representing an enlarged view of the interfaces between the foil and the aluminium alloy strip products. Heat will thus be generated predominantly in the vicinity of the foil, which will therefore become hotter than the aluminium alloy strip products. Moreover, because the melting layer is not bonded to one of the aluminium alloy strip products, the heat flow between the foil and the aluminium alloy strip product through thermal conduction is relatively small. This allows the foil to reach a higher temperature than the surrounding aluminium alloy strip products. Even when the foil is of the same alloy, it will reach its melting state before the surrounding aluminium alloy strip products, melt and cause the lap joint to be formed.

### Example 1

An AC current spot welding device having an electrode diameter of 6 mm and a rounded tip, was used to lap join various types of aluminium alloy strip products having a thickness gauge of approximately 1 mm. In each case, two of such aluminium alloy strip products were held together between two electrodes of the spot welding device, using a force of 100 N. The surfaces of the strip products were extending approximately parallel to each other, and in between the two strip products a foil was located having a thickness gauge of 100 µm. The foil was of the same aluminium alloy as the surrounding aluminium alloy strip products that were to be lap joined.

The following Aluminium Association (AA) alloys were tried: AA2024; AA5059; AA5182; AA6013; AA6016, AA 7050. Especially AA2xxx and AA7xxx alloys have a reputation of being difficult to weld.

In all cases, a satisfactory weld was obtained using three cycles of between 7.5 and 8.5 kA. For comparison, spot welding without a foil of an AA6016 alloy requires about 25 kA, so a 60 to 70 % reduction in current is achieved.

Results of the most difficult alloys are shown in Fig. 2 and Fig. 3. Fig. 2 relates to a lap joint of two AA2024 alloy strip products with a AA2024 alloy foil as the melting layer in between. Fig. 3 relates to a lap joint of two AA7050 alloy strip products with a AA7050 alloy foil as the melting layer in between.

### Example 2

The same AC current spot welding device as in Example 1, was used to lap join two AA6016 aluminium alloy sheets having a thickness gauge of approximately 1 mm, using foils of different aluminium alloys each time having a thickness of 100 µm. In each case, two of such aluminium alloy strip products were held together in a stack with the foil between them, between two electrodes of the spot welding device using a force of 100N.

In each case, an AC current of approximately 8 kA was applied in either 3 cycles or in 7 cycles.

Fig. 4a and Fig. 4b show the result of the AA 6016 aluminium alloy sheets after spot welding with a separate AA 1050 aluminium alloy foil. Fig. 4a relates to the welding result after 7 cycles, and Fig. 4b to the result after 3 cycles.

Fig. 5a and Fig. 5b show the result of the AA 6016 aluminium alloy sheets after spot welding with a separate AA 4045 aluminium alloy foil. Fig. 5a relates to the welding result after 7 cycles, and Fig. 5b to the result after 3 cycles.

As can be seen, even with the low currents that are employed, welds can be achieved using the foils having an alien alloy composition compared to the aluminium alloy strip products that are to be lap joined.

Especially in the case of 3 cycles, the weld region is of acceptable quality. It is seen in Fig. 4a and Fig. 5a, that with 7 cycles cracks appear in the weld region. When the electric current is passed from one to the other aluminium alloy strip product via the melting layer in 4 cycles or less, the weld quality is better than when too many cycles have been passed, because in that case cracks may appear in the weld region.

Although this is shown here with reference to one specific examples, this principle is not limited to this one example but it is at least also valid in the other examples mentioned in this description of the invention.

Note that in the above examples, the employed force was kept as low as 100 N. Thanks to this low force, at least lower than 250 N, the molten material in the melting layer is not squeezed away from the region where the joint is to be formed. This fact also enhances the low current that is necessary for achieving an acceptable weld.

### Example 3

Two AA 6016 aluminium sheets, each having a thickness of 1 mm, were lap joined with a linear joint using a roller seam welding apparatus. The two aluminium sheets were held together using a roller electrode under a force of 400 N, with a 200 µm thick AA 4047 aluminium foil in between them. A welding current of 8.7 kA was used and a welding velocity of 5 meters per minute was maintained. This resulted in a continuously closed joint line having a width of 3 mm.

For reference, two identical aluminium sheets as above were roller seam welded under the same conditions as above, yet without the aluminium foil between them. No joint was established this way.

The invention is illustrated by means of AC spot welding. The invention is not limited to the use of AC current, as a DC current will also dissipate power in the regions of relatively high electric resistance. The invention is also capable of being performed using a roller seam welding apparatus for producing linear joints.

## Claims

1. Method of lap joining two or more aluminium alloy strip products, preferably for an automotive panel or a fuel tank, wherein the aluminium alloy strip products are held together in a stack with a melting layer in between them, at least locally where the lap joint is to be formed, and an electric current is passed from one to another aluminium alloy strip product via the melting layer whereby heat is dissipated in the stack thereby at least locally melting the melting layer, **characterised in that** on both sides of the melting layer a region of a relatively high electric resistance is provided between the melting layer and each one of the aluminium alloy strip products, and wherein the melting layer essentially comprises an aluminium alloy identical to that of the aluminium alloy strip products, and wherein a separate foil is used as the melting layer.

2. Method according to claim 1, wherein on both sides of the melting layer a region of relatively low thermal conductivity is provided between the melting layer and each one of the aluminium alloy strip products.

3. Method according to claim 2, wherein the regions of relatively low thermal conductivity coincide with the regions of relatively high electric resistance.

4. Method according to any one of claims 1 to 3, wherein the thermal mass per unit area of the melting layer is lower than that of each of the aluminium alloy strip products.

5. Method according to claim 4, wherein the foil comprises an oxidised surface, for instance in the form of a native oxide.

6. Method according to claim 4 or 5, wherein the thickness gauge of the foil is chosen relatively thin compared to the thickness gauge of the aluminium alloy strip products.

7. Method according to any one the claims 4 to 6, wherein the separate foil has a thickness gauge thinner than half of that of the thinnest of the two aluminium alloy strip products that are to be lap joined.

8. Method according to any one of the claims 4 to 7, wherein the separate foil has a thickness gauge thinner than 20% of that of the thinnest of the two aluminium alloy strip products that are to be lap joined.

9. Method according to any one of the claims 4 to 8, wherein the separate foil has been provided with a clad layer or plating layer.

10. Method according to any one of the preceding claims, wherein the surfaces of the aluminium alloy strip products are de-oxidised, for instance by pickling.

## Patentansprüche

1. Verfahren zum überlappenden Verbinden von zwei oder mehr Aluminiumlegierungsbandmaterialien bzw. -produkten, vorzugsweise für eine Kfz-Verkleidung oder einen Treibstofftank, wobei die Aluminiumlegierungsbandprodukte in einem Stapel mit einer dazwischenliegenden Schmelzschicht zusammengehalten werden, zumindest an der Stelle, wo die Überlappungsverbindung geformt werden soll, und elektrischer Strom von einem Aluminiumlegierungsbandprodukt über die Schmelzschicht zum anderen geschickt wird, wobei Wärme in den Stapel abgeführt wird, wodurch die Schmelzschicht zumindest lokal geschmolzen wird, **dadurch gekennzeichnet, dass** auf beiden Seiten der Schmelzschicht ein Bereich mit einem relativ hohen elektrischen Widerstrand zwischen der Schmelzschicht und jeder der Aluminiumlegierungsbandprodukte vorgesehen ist, und wobei die Schmelzschicht im Wesentlichen eine Aluminiumlegierung enthält, die mit der der Aluminiumlegierungsbandprodukte identisch ist, und wobei eine separate Folie als Schmelzschicht verwendet wird.

2. Verfahren nach Anspruch 1, wobei auf beiden Seiten der Schmelzschicht ein Bereich mit relativ geringer Wärmeleitfähigkeit zwischen der Schmelzschicht und jedem der Aluminiumlegierungsbandprodukte vorgesehen ist.

3. Verfahren nach Anspruch 2, wobei sich die Bereiche mit relativ geringer Wärmeleitfähigkeit mit den Bereichen mit relativ hohem elektrischem Widerstand decken.

4. Verfahren nach einem der Ansprüche 1 bis 3, wobei die thermisch wirksame Masse je Flächeneinheit der Schmelzschicht kleiner ist als die jeder der Aluminiumlegierungsbandprodukte.

5. Verfahren nach Anspruch 4, wobei die Folie eine oxidierte Oberfläche, zum Beispiel in Form eines nativen Oxids, umfasst.

6. Verfahren nach Anspruch 4 oder 5, wobei das Dickenmaß der Folie im Vergleich zum Dickenmaß des Aluminiumlegierungsbandprodukts relativ dünn gewählt wird.

7. Verfahren nach einem der Ansprüche 4 bis 6, wobei die separate Folie ein Dickenmaß hat, das dünner ist als die Hälfte der dünnsten der beiden Aluminiumlegierungsbandprodukte, die überlappend verbunden werden sollen.

8. Verfahren nach einem der Ansprüche 4 bis 7, wobei die separate Folie ein Dickenmaß hat, das dünner ist als 20% der dünnsten der beiden Aluminiumlegierungsbandprodukte, die überlappend verbunden werden sollen.

9. Verfahren nach einem der Ansprüche 4 bis 8, wobei die separate Folie mit einer Plattierschicht oder Ummantelung versehen ist.

10. Verfahren nach einem der vorhergehenden Ansprüche, wobei die Oberflächen der Aluminiumlegierungsbandprodukte desoxidiert werden, zum Beispiel durch Beizen.

## Revendications

1. Procédé d'assemblage avec recouvrement de deux pièces en forme de bandes ou plus, en alliage d'aluminium, de préférence pour panneau d'automobile ou réservoir de carburant, dans lequel on maintient empilées ensemble les bandes en alliage d'aluminium, avec une couche de fondant disposée entre elles, au moins à l'endroit où l'on veut former le joint par recouvrement, et l'on fait passer un courant électrique d'une bande en alliage d'aluminum à l'autre, au travers de la couche de fondant, grâce à quoi il y a dissipation de chaleur dans l'empilement, ce qui fait que la couche de fondant fond, au moins localement, lequel procédé est **caractérisé en ce qu'**est établie une zone à résistance électrique relativement élevée sur les deux faces de la couche de fondant, entre la couche de fondant et chacune des bandes en alliage d'aluminium, laquelle couche de fondant est essentiellement constituée d'un alliage d'aluminium identique à celui des bandes en alliage d'aluminium, une feuille mince distincte servant de couche de fondant

2. Procédé conforme à la revendication 1, dans lequel est établie une zone à conductivité thermique relativement faible sur les deux faces de la couche de fondant, entre la couche de fondant et chacune des bandes en alliage d'aluminium.

3. Procédé conforme à la revendication 2, dans lequel les zones à conductivité thermique relativement faible coïncident avec les zones à résistance électrique relativement élevée.

4. Procédé conforme à l'une des revendications 1 à 3, dans lequel la masse thermique par unité d'aire de la couche de fondant est inférieure à celle de chacune des bandes en alliage d'aluminium.

5. Procédé conforme à la revendication 4, dans lequel la feuille mince comporte une surface oxydée, par exemple à l'état d'oxyde natif.

6. Procédé conforme à la revendication 4 ou 5, dans lequel on emploie une feuille mince dont l'épaisseur est relativement petite, en comparaison de l'épaisseur des bandes en alliage d'aluminium.

7. Procédé conforme à l'une des revendications 4 à 6, dans lequel l'épaisseur de la feuille mince distincte vaut moins que la moitié de l'épaisseur de la plus mince des deux bandes en alliage d'aluminium à assembler par recouvrement.

8. Procédé conforme à l'une des revendications 4 à 7, dans lequel l'épaisseur de la feuille mince distincte vaut moins que 20 % de l'épaisseur de la plus mince des deux bandes en alliage d'aluminium à assembler par recouvrement.

9. Procédé conforme à l'une des revendications 4 à 8, dans lequel la feuille mince distincte a été munie d'une couche de revêtement ou d'une couche de placage.

10. Procédé conforme à l'une des revendications précédentes, dans lequel les surfaces des bandes en alliage d'aluminium ont été désoxydées, par exemple par décapage.
